Europäisches Patentamt

(19) European Patent Office

Office européen des brevets

(11) Publication number: **0 041 505**
**B1**

# (12) EUROPEAN PATENT SPECIFICATION

(45) Date of publication of patent specification: **18.07.84**      (51) Int. Cl.³: **F 02 F 3/00, F 16 B 35/00**

(21) Application number: **80901663.7**

(22) Date of filing: **08.09.80**

(86) International application number:
**PCT/GB80/00136**

(87) International publication number:
**WO 81/00740 19.03.81 Gazette 81/7**

(54) PISTON FOR INTERNAL COMBUSTION ENGINE.

| | |
|---|---|
| (30) Priority: **08.09.79 GB 7931262**<br>**08.09.79 GB 7931263** | (73) Proprietor: **PERKINS ENGINES GROUP LIMITED**<br>**33 Davies Street**<br>**London WIY 2EA (GB)** |
| (43) Date of publication of application:<br>**16.12.81 Bulletin 81/50** | (72) Inventor: **DUNN, Stephen John**<br>**Woodgate Cottage 22 Wood Gate**<br>**Helpston Peterborough (GB)**<br>Inventor: **Sparrow, Alan Wycliffe**<br>**18 Amanda Court Thorpe Lea Road**<br>**Peterborough (GB)** |
| (45) Publication of the grant of the patent:<br>**18.07.84 Bulletin 84/29** | |
| (84) Designated Contracting States:<br>**DE FR SE** | (74) Representative: **Jones, David Bryn**<br>**Patent and Trade Marks Department Massey-Ferguson**<br>**Stareton, near Kenilworth Warwickshire CV8 2LJ (GB)** |
| (56) References cited:<br>**FR - A - 2 346 565**<br>**FR - A - 2 385 009**<br>**GB - A - 124 139**<br>**GB - A - 2 020 782**<br>**US - A - 3 461 769**<br>**US - A - 3 889 352** | |

Courier Press, Leamington Spa, England.

## Description

Technical field

This invention relates to pistons for internal combustion engines.

It is known to construct pistons for internal combustion engines so that they have a separate crown portion which is attached to the body of the piston. For example, it is known to provide a crown portion formed with a combustion chamber or to provide a ring-shaped insert to form the lip of a combustion chamber in the crown of a piston. The crown portion or insert is preferably composed of a material particularly suited to the thermal and gas pressure conditions to which the crown is exposed in operation.

The crown portion or insert may be attached to the body of the piston by casting the body around or against it so that the two are keyed together. A technique of this type is used in the piston disclosed in our United Kingdom Patent No. 1560792 in which an insert is provided with legs that are embedded in the body of the piston by casting the body around the insert and legs. Furthermore the legs are such as to extend from the insert into a portion of the body, the temperature of which, at maximum operating temperatures, is such that loosening of the member in that portion is prevented. Alternate tensile and compressive loads are transmitted through the legs to said portion of the body when the piston is in operation.

Alternatively, the crown portion or insert may be attached to the pre-formed body of the piston using separate attachment means such as bolts ot studs. In all of the known examples, the bolts or studs serve to clamp the crown portion or insert against the body of the piston. However, this clamping action is dependent upon the bolts or studs being held in tension by the reaction force between the inter-engaging surfaces of the crown portion and piston, and is therefore impaired by relative expansion and thermal yielding of said inter-engaging surfaces. There is therefore a tendency for the bolts or studs to loosen, which in turn results in damage or destruction of the piston. Further compressive forces produced when the piston is in operation are transferred directly from the crown portion to the piston body through said inter-engaging surfaces, and this in turn induces thermal yielding producing loosening of the bolts or studs.

Disclosure of the invention

An object of the present invention is to provide a piston in which a crown portion of insert is attached to the body of the piston securely whilst avoiding the aforesaid disadvantages of the known clamping technique.

A piston according to the invention comprises a piston body and a crown portion that are connected by anchoring means comprising one or more elongate members that extend from the crown portion into the piston body so as to transmit tensile and compressive loads from the crown to a portion of the piston body in a region spaced axially away from the crown portion at a temperature which, at maximum operating temperatures, is low enough to prevent loosening of the anchoring means, characterized in that cooperating surfaces of said anchoring means and piston body are pre-loaded into contact with one a other by virtue of mechanically applied strain energy stored in the anchoring means and piston body and which acts to prevent parting of said cooperating surfaces by said tensile and compressive loads without being dependent of any reaction forces between the adjacent faces of the crown portion and piston body.

The invention therefore retains the advantage of using anchoring means that transmit both tensile and compressive loads between the crown portion and a cooler portion of the body portion spaced away from the crown portion, and provides pre-loading of the cooperating surfaces of the connection between the anchoring means and said body portion so as to prevent them parting and causing fretting and loosening of said connection.

The anchoring means may comprise at least one member that is inserted into a bore in the piston body and is rigidly connected axially to the crown portion at one end and rigidly connected axially to said portion of the piston body at its other end, the anchoring member therefore being loaded both in tension and compression by the forces acting between the piston body and crown portion in operation.

The rigid axial connections may be made in many different ways. For example, screw threaded connections with pre-loaded or locked threads may be preferred as being simple and inexpensive. The anchoring member may comprise a bolt or stud that is threaded in respective holes in both portions and is locked in each individually by means of a lock nut or set screw, or by axial abutment between the head or end of the bolt or stud and a respective one of said portions, or by a change in thread pitch. The threads in said holes may be pre-formed, in which case the thread starts may have to be matched, or may be formed by the bolt or stud itself.

In other embodiments of the invention the anchoring means comprises at least one strut member that extends from the crown portion into the piston body so as to absorb compressive forces therebetween and thereby relieve compressive loading of the adjacent faces of the piston body and crown portion, and at least one tie member that is connected between the piston body and crown portion to restrain separation and that is pre-loaded in tension.

The joint action of the tie member and strut member is to absorb the axial operating forces so as to maintain the crown portion fixed relative to the piston body without being dependent on inter-engagement of the adjacent faces of these components. The pre-load in the tie member maintains the crown portion in engagement with the strut member, and the strut member extends into the piston body so as to axially abut a portion of the body that is cooler in operation and can withstand the compressive forces exerted on the strut member.

The pre-load may be produced by providing a resilient strut member, for example, a resilient rod or sleeve, and compressing said member during assembly. Alternatively, separate resilient means may be provided to pre-load the tie member, for example, spring means that acts between the tie member and piston body.

The pre-load applied to the tie member may also be used to ensure that the tie member is connected securely to a retaining member that engages the piston body. For example, the tie member may be a bolt or stud that projects through a bore in the piston body and engages a threaded hole in the retaining member, the cooperating threads being locked by said pre-load to resist loosening.

Description of the drawings

The invention will now be described by way of example with reference to the accompanying drawings in which:—

Figure 1 is a cross section through half a piston according to one embodiment of the invention;

Figure 2 is a cross section through half a piston according to a second embodiment of the invention;

Figure 3 is a scrap view showing a modification to the anchoring means of the piston of Figure 2;

Figure 4 shows a further modification to the anchoring means of the piston of Figure 2;

Figure 5 is a cross section through half a piston according to a third embodiment of the invention;

Figure 6 is a scrap view showing a modification to the piston of Figure 5;

Figure 7 is a cross section of half a piston according to the invention having anchoring means comprising a pin welded or brazed to an insert at one end and connected to the piston body by connection means at its other end;

Figures 8 to 20 each show a scrap view of alternative connection means to that of Figure 7 between the pin and piston body;

Figure 21 is a cross section of half a piston according to the invention having anchoring means comprising a pin with a clamp type connection between the pin and piston body;

Figure 22 is a view showing an alternative clamp type connection to that of Figure 21;

Figure 23 is a cross section of half a piston according to the invention having anchoring means comprising separate coaxial tie and strut members;

Figures 24 to 27 each show an axial section of a piston according to the invention having anchoring means comprising separate spaced apart tie and strut members.

Best mode of carrying out the invention

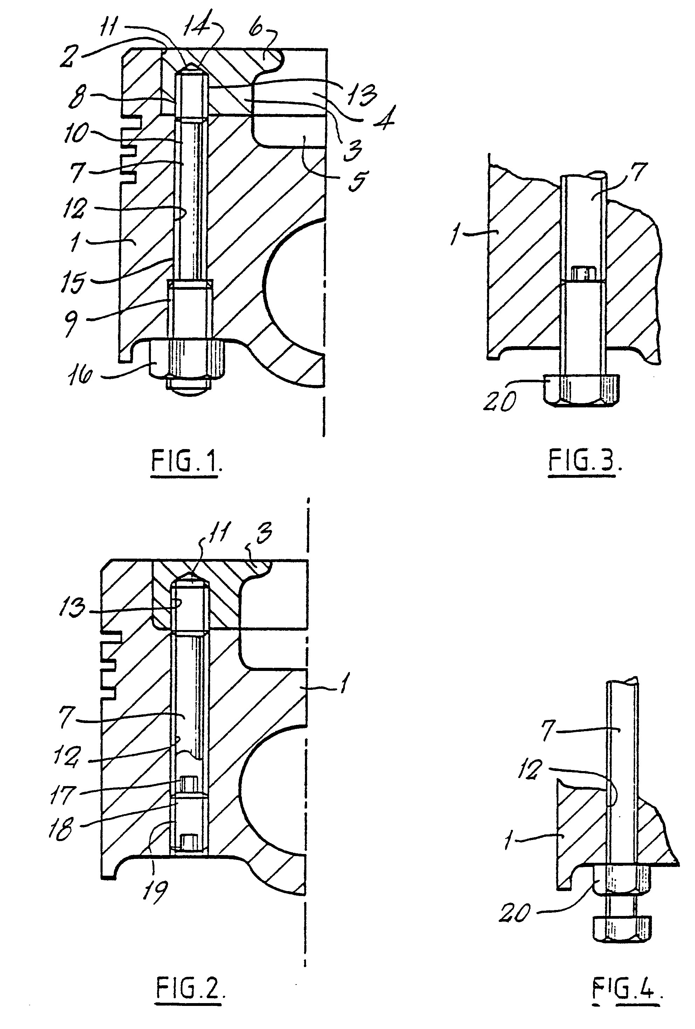

The piston illustrated in Figure 1 comprises a piston body 1 cast out of aluminium-silicon alloy and having a recess 2 in the crown to receive an annular insert 3 of heat resistant material. The crown of the piston has a combustion chamber 4 formed by a recess 5 in the crown of the piston body and the central bore of the insert 3. The insert 3 is formed with an inwardly projecting annular lip 6 so as to give the combustion chamber a re-entrant profile. The insert is composed of a heat resistant material so as to give the lip 6 the necessary strength to withstand the combustion chamber operating conditions. For example, the insert may be cast from a copper alloy including 0.5 per cent beryllium and 2.5 per cent cobalt.

The insert is secured in place in the recess 2 by two or more threaded studs 7 that extend through the piston body parallel to the piston axis and are located on diametrically opposite sides of said axis. Each stud has a threaded portion 8, 9 at each end of an intermediate plain portion 10 of a reduce diameter. One threaded end portion 8 has a tapered tip 11 and, during the assembly operation, it is inserted from the underside of the piston through a plain bore 12 in the piston body end engages a blind bore 13 in the underside of the insert. The bore 13 is of a smaller diameter than the end portion 8 of the stud and the stud is rotatably driven so that it is threaded into the bore 13, forming a cooperating thread in the wall of the bore 13 in the process. The stud is driven in this manner until its tapered tip 11 abuts the tapered end 14 of the bore 13, the loading reaction then producing a locking action between the threads.

The threaded portion 9 at the other end of the stud has a larger diameter than the end portion 8, and engages a corresponding radially enlarged portion 15 of the bore 12 at its lower end. This enlarged portion 15 of the bore is of a smaller diameter than the threaded end portion 9 of the stud, and thus the end portion 9 forms a thread in the bore 15 as the stud is rotatably driven into the bore in the same manner as end portion 8 in bore 13. Preferably, the longitudinal dimensions of the different portions of the stud and bore in the piston body are such that the upper threaded portion 8 commences forming a thread in the insert before the lower threaded portion 9 commences forming a thread in the piston body. The threads on the portions 8 and 9 are both of the same pitch.

Once the stud is fully inserted a locknut 16 is threaded onto the lower threaded portion 9, a loading reaction being produced between it and the underside of the piston to lock the cooperating threads of the portion 9 and bore 15, tensile strain energy being stored in the stud and compressive strain energy being stored in the surrounding piston body and locknut 16.

It will be appreciated that in the final assembled state, the insert is rigidly connected to one end of the stud and the piston body is rigidly connected to the other end of the stud. Consequently there need be no initial clamping force in the stud. In use, the stud acts alternately as a tie and strut in resisting the operating forces applied to the insert. These forces do not exceed the pre-loading forces of the locked thread connections at each end of the stud so loosening and fretting of the connections is avoided.

A piston having a similar piston body 1 and insert 3 to that of the piston of Figure 1, is shown in Figure 2. Again, a pair of threaded studs 7 connect the insert to the piston body. Each stud is of a constant diameter, is threaded throughout its length and terminates in a tapered tip 11 at one end and in a recessed head 17 at the other end. Each stud is rotatably driven into a bore 12 in the piston body so as to form a cooperating thread throughout its length. The tip of the stud then engages a blind bore 13 in the underside of the insert 3, of the same diameter as the bore 12, and the stud proceeds to thread into the bore 13. Abutment of the tapered tip 11 with the tapered end of the bore 13 serves to lock the cooperating threads of the stud 7 and bore 13, as in the embodiment of Figure 1.

The stud 7 is of a length such that its recessed head 17 lies within the bore 12 when fully inserted, the recess 18 in the head being engaged by a suitable tool such as an hexagonal key to drive the stud home. After insertion of the stud 7, a locking grub screw 19 is screwed into the bore 12 and abuts the head of the stud to lock the cooperating threads of the stud and bore 12. In this embodiment compressive strain energy is stored in the stud and grub screw 19 and tensile strain energy is stored in the surrounding body.

As an alternative to using the grub screw 19, a set screw 20 can be used as shown in Figure 3, to lock the cooperating threads of the stud 7 and bore 12.

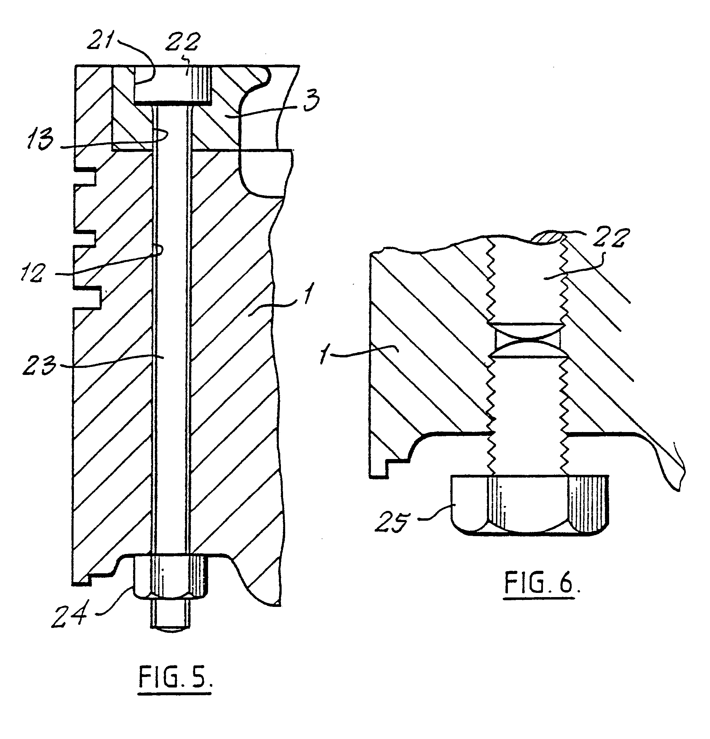

In another alternative embodiment of the invention, the stud 7 in Figure 1 is replaced by a longer bolt with a similar tapered tip 11. The bolt forms threads in the bore 12 in the piston body and in the bore 13 in the insert, as described above, but the head of the bolt is spaced away from the bottom of the piston body when the bolt is fully inserted. In order to lock the bolt in the bore 12, a lock nut 20 is provided on the bolt to be loaded against the underside of the piston body, as shown in Figure 4.

Another embodiment of the invention employing bolts as the anchoring means, is illustrated in Figure 5. The piston body 1 and insert 3 can be considered to be basically the same as in the preceding embodiments but the insert is formed with a recess 21 to receive the head 22 of a bolt 23 that is threaded from the top of the piston down through the aligned bores 12, 13 in the piston body and insert 3. The bores 12, 13 are formed with a smaller diameter than the bolt 23 and the bolt is rotatably driven to form cooperating threads in the walls of the bores. The head of the bolt is loaded against the base of the recess 21 so as to lock the cooperating threads of the bolt and bore 13 in the insert. A locknut 24 is threaded onto the lower end of the bolt after insertion and is loaded against the lower face of the piston body to lock the cooperating threads of the bolt and bore 12 in the piston body, as described in relation to Figure 1.

In the embodiments of Figures 1, 4 and 5, the bolt 7 is tensioned by a locknut during assembly and this tends to load the inter-engaging faces of the insert and piston body. This can be avoided by providing a gap between these two faces using a suitable jig or a shim. If the shim is composed of a soft material or one that yields rapidly with rise in temperature, it may be left in place after tightening the locknut.

The embodiment of Figure 5 may be modified by using shorter bolts 22 and locking each to the piston body using a grub screw of lock screw. Figure 6 illustrates such a modification in which a lock screw 25 is used. This is of the same diameter as the bolt 22 and forms a cooperating thread in the bore 12 in the same manner. This lock screw 25 applies an upwards force to the end of the bolt to lock it to the piston body. This upwards force is in the same direction as the upwards reaction on the head of the bolt 22 that locks its threads in the bore 13 in the insert. Compressive strain energy is stored in the end of the bolt and lock screw 25 and tensile strain energy is stored in the surrounding piston body.

In all of the preceding embodiments where a bolt or screw or stud has been threaded in the insert or piston body this has been achieved by driving the bolt screw or stud so as to form a cooperating thread. However, it will be appreciated that in all cases preformed threads may be provided instead. The only difficulty will be to ensure that successive threads engaged by the bolt, screw or stud are started in the correct relationship to one another. This difficulty could be overcome by tapping the components to be threaded after they have been located in their assembled positions.

Further, when using a preformed thread in a bore in the insert or piston body it is possible to change or vary the pitch of the thread on the bolt so as to obtain an automatic locking action of the bolt when threaded into the bore. For example, the locknut 20 in the embodiment of Figure 4 may be omitted and a preformed thread with a change of variation of pitch performed on the bolt 7 to be received in the bore 12.

It should also be appreciated that, some of the preceding embodiments can be modified so that the two connections of the anchoring means to the insert and piston body can be interchanged or inverted. Also, springs or belleville washers (as described below) can be used in the preceding embodiments to assist in overcoming differential thermal expansion. Thus, for example, in Figure 1 a spring or belleville washer could be provided between nut 16 and piston body 1 and/or between insert 3 and the end of stud 7. Such an arrangement provides the stud fixing with resilience and increased strain energy capacity.

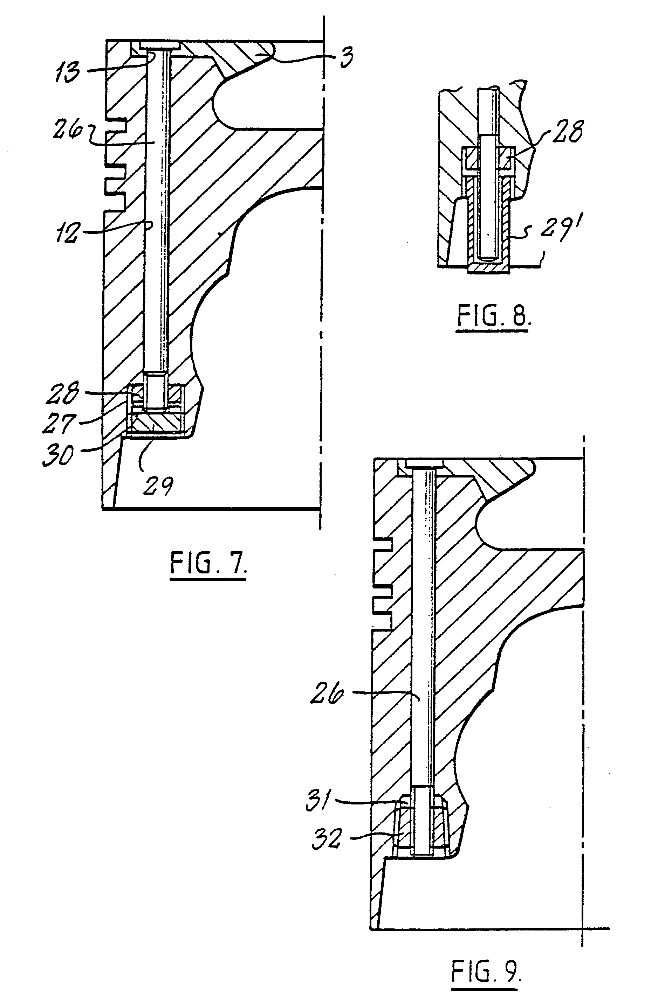

Other alternative embodiments of the invention are illustrated in Figures 7 to 22 in which bolts or pins 26 are inserted through aligned plain bores 12, 13 in the piston body insert 3, and are connected to the insert and piston body by means other than direct threaded engagements.

In all cases, the heads of the bolts or pins 26 engage recesses 27 in the insert and are welded or brazed in place. This allows the insert to be thinner and lighter than when threading studs or bolts into the insert.

In the embodiment of Figure 7, the bolt 26 is formed with a thread at its lower free end and projects in to an internally threaded recess 27 in the lower face of the piston body. A nut 28 is threaded onto the end of the bolt and abuts the piston body. A second nut 29 is then threaded into the recess so as to be loaded against the end of the bolt and lock the cooperating threads of the bolt and njt 28. The threads of the two nuts 28, 29 are of opposite hand and a locking washer 30 is provided between them. Alternatively, the threads of the two nuts 28, 29 could be of the same hand and locked by other means. In all cases compressive strain energy is stored in the end of the bolt 26, and the nuts 28, 29 and tensile strain energy is stored in the surrounding piston body.

In order to avoid unloading of the bolt 26 due to thermal expansion, a spring member, e.g. a belleville or dished washer, may be provided between the bolt 26 and the nut 29. Alternatively, a longer bolt 26 could be used and the nut 29 modified as shown in Figure 8 so that it has an extended cup-shaped portion $29^1$ that receives the end of the bolt and acts resiliently on it, tensile strain energy being stored in said nut.

In the embodiment of Figure 9, the bolt 26 is formed with a thread at its lower free end and projects into a frusto-conical, internally threaded recess 31 in the lower face of the piston body. A nut 32 having an outer profile of a matching frusto-conical shape and formed with an external thread of the same pitch as its internal thread, is threaded onto the bolt and simultaneously engages the internal thread of the recess, eventually locking in place in the recess. The thread starts on the bolt and in the recess have to be accurately positioned to match the thread starts on the nut 32. The nut 32 may be slit, at least partially, to allow radial gripping movement of the threads.

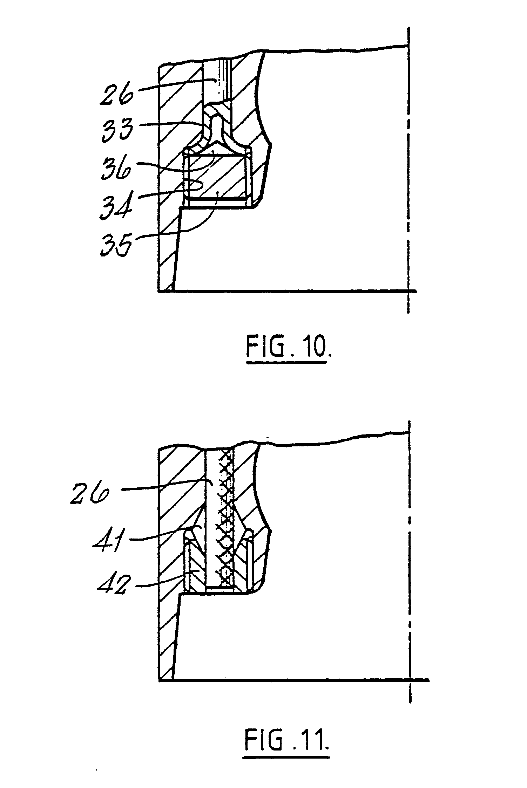

In the embodiment of Figure 10, the lower end of pin 26, after insertion through the bores 12, 13, is swaged open within a recess 34 formed in the lower face of the piston body. The recess is threaded internally and a set screw 35 with a conical end 36 is threaded into the recess so that the conical end clamps the swaged portions of the pin against the bottom of the recess. Compressive strain energy is stored in the shaped end of the pin and the screw 35, and tensile strain energy is stored in the surrounding piston body. Spring means such as a belleville washer may be inserted between the screw 35 and swaged end of the pin 26 to increase the pre-loading.

In the embodiment of Figure 11, the lower end of the pin 26 projects into internally threaded recess 40 in the lower face of the piston body. An olive 41 is inserted over the pin and a nut 42 is threaded into the recess over the end of the pin and acts upon the olive to deform it axially against the bottom the recess and cause it to grip the pin. Preferably, the end of the pin is knurled or serrated so as to allow more positive gripping by the olive. Spring means such as a belleville washer may be inserted between the nut 42 and the olive 41.

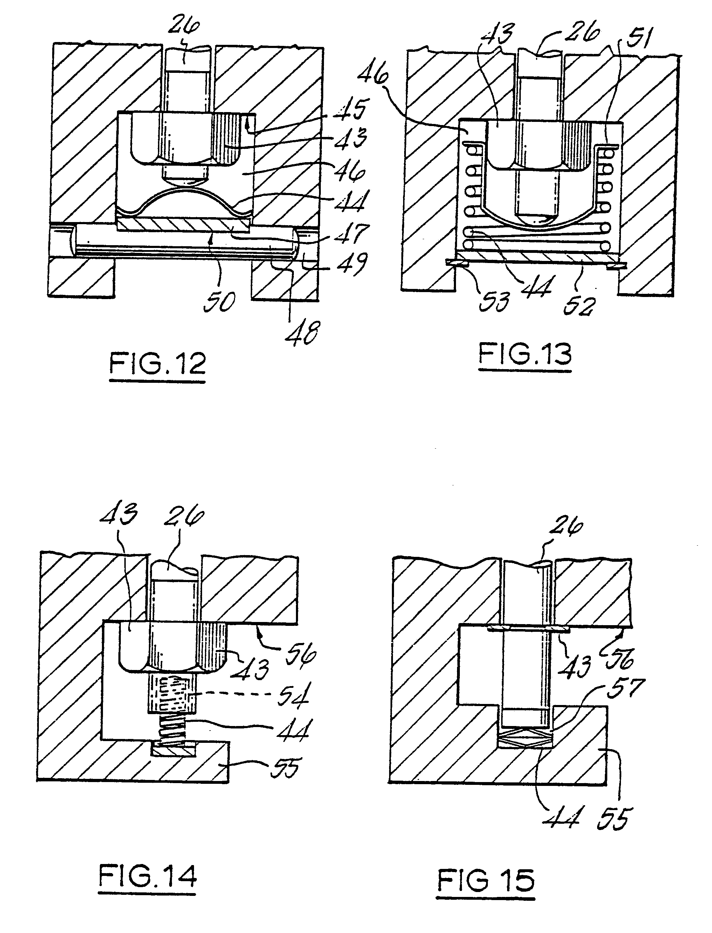

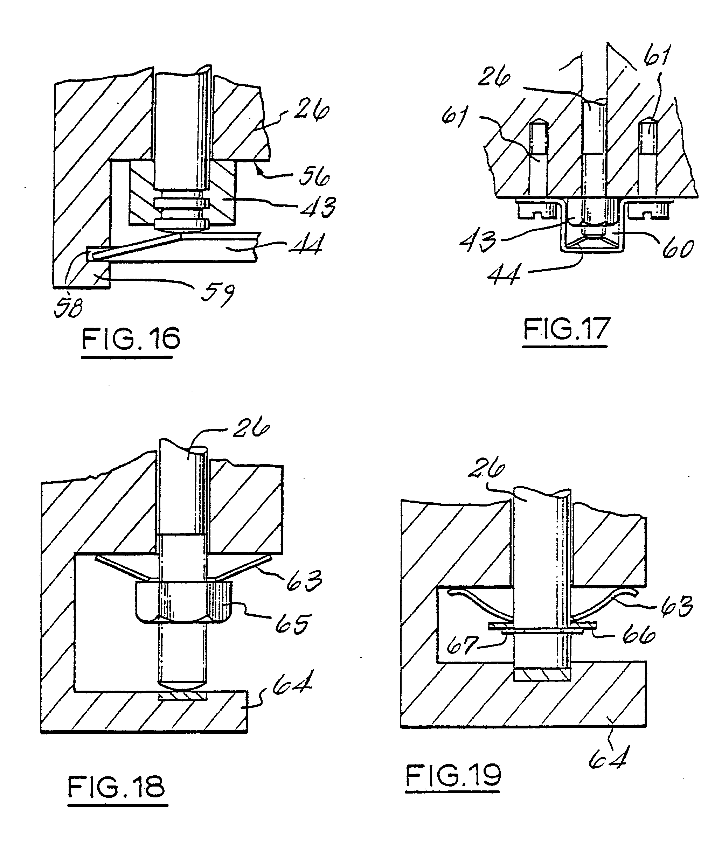

The embodiments illustrated in Figures 12 and 17 each has a connection between the lower end of the pin 26 and the piston body comprising an abutment 43 on the pin and separate spring means 44 that acts between the pin 26 and the piston body to load the abutment upwards into engagement with a lower abutment face on the piston body. The abutment 43 may comprise a locknut as shown in Figures 12 to 14 and 17 or a circlip as shown in Figure 15 or a swaged collar as shown in Figure 16.

In Figure 12, the spring means 44 comprises a curved spring washer that acts axially against the lower end of the pin 26 so as to urge the nut 43 upwards into engagement with a lower face 45 of the piston body. The washer is supported in a circular recess 46 in the piston body on a support disc 47 that is held in place by a pin 48 that is inserted through a transverse hole 49 in the piston body between opposite walls of the recess 46. The pin 48 is formed with a flat 50 in which the disc 47 is engaged by the spring washer 44 to lock the pin in place. In an alternative arrangement the spring washer 44 may be replaced by a belleville washer.

In Figure 13, the spring means 44 comprises a coiled compression spring that is located in a pocket 46 and acts upon the lower end of the pin 26 through the medium of a pressed cup 51 that fits over the end of the pin and nut 43. The coil spring 44 is supported on a disc 52 that is held in the pocket 46 by a circlip 53, and acts upon the pin to urge the nut 43 upwards into engagement with the bottom of the recess.

In Figure 14, the spring means 44 comprises a spring rod that axially engages within a bore 54 in the end of the pin 26 and engages a reaction member 55 connected to the piston body so that the spring rod 44 urges the nut 43 into engagement with the lower face 56 of the piston body.

In Figure 15, the spring means 44 comprises belleville washers that are located in a pocket 57 of a reaction member 55 connected to the piston body and act upon the lower end of the pin 26 to urge the circlip upwards into engagement with the lower face 56 of the piston body.

In Figure 16, the spring means 44 comprises a belleville washer that engages in an annular groove 58 in a skirt 59 projecting downwards around the lower end of the piston body, the washer 44 acting upwards against the lower end of the pin 26 to urge the collar 43 into engagement with the lower face 56 of the piston body.

In Figure 17, the spring means 44 comprises a belleville washer that engages between the head of the pin and a housing 60 that engages over the head of the pin and nut 43 and is connected by screws 61 to the lower face of the piston body.

Figures 18 and 19 illustrate embodiments in which spring means 63 is provided that acts upon the pin 26 so as to urge it downwards into engagement with a thrust member 64 that is connected to the lower end of the piston body. In Figure 18, the spring means 63 is a belleville washer located on the pin 26 and acting between a lower face of the piston body and a nut 65 threaded on the pin so as to urge the lower end of the pin into engagement with the thrust member 64. In Figure 18, the nut 65 is replaced by a washer 66 and circlip 67.

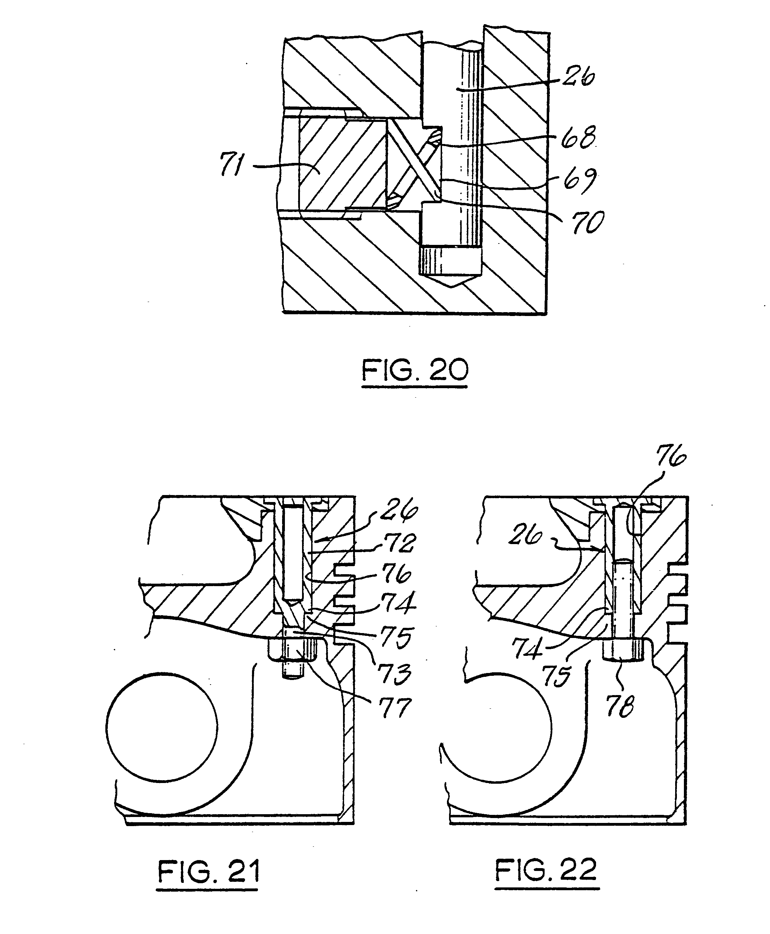

The embodiment illustrated in Figure 20 also employs spring means to urge the pin 26 into engagement with a fixed abutment. In this case the spring means comprises a ring member 68 that engages one end of a notch 69 in the side of the pin, and which is arranged in a cross-over relationship with a rigid abutment member 70 that engages the other end of the notch 69. Both ends of the spring 68 and the abutment 70 spaced away from the notch engage a common clamping screw 71 so that movement of the screw 71 towards the notch produces a scissor action between the spring and abutment, the spring being compressed and acting to urge the pin in one direction against the bracing action of the abutment.

In the embodiment of Figure 21, the pin 26 is formed with a tubular shank 72 and a threaded end portion 73 of reduced diameter with a shoulder 74 therebetween that engages an annular ledge 75 within the lower end of a dual diameter bore 76 formed through the piston body to receive the pin. A nut 77 is threaded onto the end portion of the bolt and tightened against the lower face of the piston body so that the shoulder 74 is clamped against the ledge 75, a compressive preload being applied to that portion of the piston between the shoulder 74 and nut 77 and a tensile pre-load being applied to the end portion 73 of the pin between the shoulder 74 and nut 77. The reaction on the nut 77 serves to lock in to the pin.

In the embodiments of Figure 22, the pin 26 is tubular and is formed with an internal thread to receive a set screw 78 that is engaged from the underside of the piston body. This arrangement is equivalent to that of Figure 21 in that the screw 78 acts like the nut 77 to clamp the lower end of the pin at 74 against an annular ledge 75 within the dual diamter bore 76 formed through the piston body.

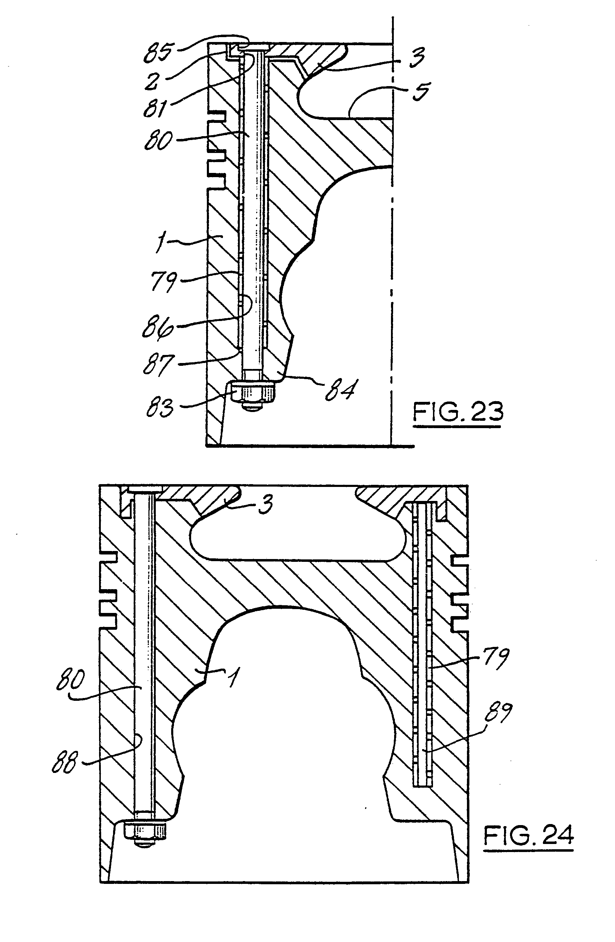

The embodiments of the invention now to be described in relation to figures 23 to 27 each employ anchoring means comprising at least one strut member 79 that extends from the insert 3 into the piston body to absorb compressive forces therebetween and at least one tie member 80 that is connected between the piston body and insert to restrain separation and that is pre-loaded in tension.

In Figure 23, the insert 3 is secured in place in the recess 2 by a number of tie bolts 80 that each project downwards through a bore 81 in the insert and a bore 82 in the piston body 1 and have a nut 83 threaded onto their lower end so as to abut a lower shoulder 84 of the piston body. The head of the bolt may be loosely received in a recess 85 in the upper face of the insert or may be welded or brazed in place in said recess.

The bore 82 in the piston body is enlarged radially over the larger part of its length from the upper end downwards so as to leave an annular space 86 around the bolt 80 that receives a resilient sleeve 79 between the lower face of the insert 3 and the annular shoulder 87 where said annular space terminates. This sleeve 79 can be composed of a rectangular section strip that is helically wound or can be a slotted tube, and is stiff enough to withstand the compressive operating loads applied between the insert and piston body. During assembly, the sleeve 79 is compressed axially by the bolts 80 as the nuts 83 are tightened, thereby pre-loading the bolts with a tensile force and the sleeve with a compressive force. The compressive force in the sleeve counteracts the inertia forces exerted on the insert at bottom dead centre and also serves to lock the nut 83 on the bolt 80, thereby resisting lossening of the nut.

The piston illustrated in Figure 24 is similar to that of Figure 23 except that the bolt and resilient sleeve are each located in a separate bore, the bolt 80 being received in a uniform bore 88 and the sleeve 79 being received in a blind bore 89 that opens upwards beneath the insert. The bolt and spring may be located close to one another, or may be widely spaced apart. For example, two bolts may be located diametrically opposite one another and the corresponding pair of resilient sleeves may be located diametrically opposite one another on the perpendicular bisector therebetween.

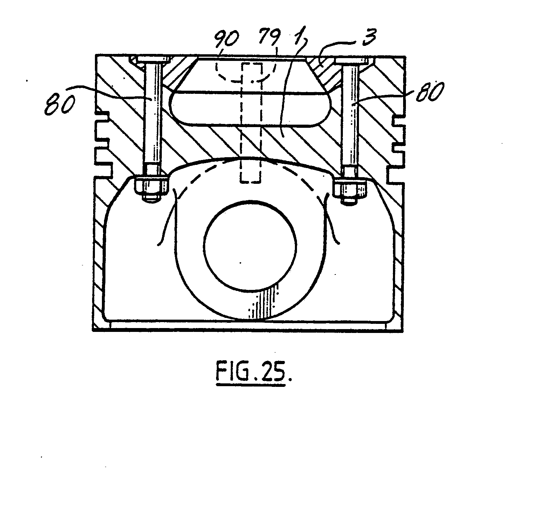

The piston illustrated in Figure 25 is similar to that of Figure 23 except that the insert and piston body are of a different shape, and the resilient sleeve 79, instead of abutting the underside of the insert, is received in a blind bore 90 in its underside A pair of bolts 80 are shown spaced diametrically opposite one another with the corresponding pair of resilient sleeves arranged diametrically opposite one another on the perpendicular bisector therebetween.

In all of the aforesaid embodiments in which the resilient sleeves are located in separate bores in the piston body, they may be replaced by solid resilient rods or even non-resilient rods. In the latter case, some resilience may be provided by the rest of the assembly. Alternatively a solid rod can be provided in the upper end of the bore above the resilient sleeve, or the upper end of the sleeve can be made solid so that it is more resistant to heat. Also, where a resilient sleeve is located in a separate bore its centre may be plugged so as to reduce the gas capacity of the bore.

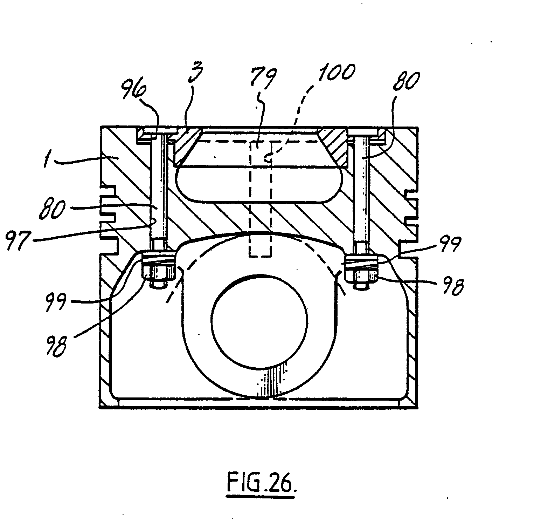

The piston illustrated in Figure 26 comprises a piston body 1 and insert 3 similar to those in Figure 25. A pair of bolts 80 are inserted through bores 96, 97 in the insert and piston body and engage nuts 98 to secure the insert to the piston body. A resilient member 99, such as a helical spring or belleville washer, is provided on the lower end of each bolt so as to be compressed between the nut 98 and the underside of the piston body, and thereby pre-load the bolt and urge the insert 3 downwards twowards the piston body 1. However, the insert is not clamped against the top of the piston body, but is clamped against struts 79 that are located in blind bores 100 in the piston body. These struts may be solid or tubular rods that project slightly out of the top of the bores 100 and extend downwards to a cool part of the piston body that can best withstand the operating loads exerted through the struts. As shown in Figure 26, a pair of bolts 80 are located diameterically opposite one another and a pair of struts 79 are located diametrically opposite one another on the perpendicular bisector between the bolts 80.

In all of the embodiments of Figures, the piston body and insert are manufactured as separate components and then assembled together. However, in other embodiments it is possible that the piston body may be cast around the insert or vice versa and the anchoring means fitted afterwards to connect them together. For example, holes and recesses could be bored in the assembly to receive any of the stud, bolt or pin type anchoring means illustrated in the drawings.

Typically, in the pistons illustrated, the service temperature at the crown 3 is approximately 350 degrees centigrade and the temperature distribution is known to be such that in the region of the piston rod grooves the temperature is approximately 230 degrees centigrade and in the region in which the anchoring means is connected to the piston body, the temperature is normally less than 230 degrees centigrade and may be less than 150 degrees centigrade. From the creep properties of the alloy it is known that creep properties of the allumium silicon alloy used is negligible at the temperatures likely to be encountered in the region where the anchoring means is connected to the piston body. Thus loosening of the anchoring means by thermal yielding is avoided.

**Claims**

1. A piston for an internal combustion engine comprising a piston body and a crown portion that are connected by anchoring means comprising one or more elongate members that extend from the crown portion into the piston body so as to transmit tensile and compressive loads from the crown to a portion of the piston body in a region spaced axially away from the crown portion at a temperature which, at maximum operating temperatues, is low enough to prevent loosening of the anchoring means, characterized in that cooperating surfaces of said anchoring means (7, 9, 16) and piston body (1) are pre-loaded into contact with one another by virtue of mechanically applied strain energy stored in the anchoring means and piston body (1) and which acts to prevent parting of said cooperating surfaces by said tensile and compressive loads without being dependent on any reaction forces between the adjacent faces of the crown portion and piston body.

2. A piston as claimed in claim 1 further characterized in that said anchoring means comprises at least one member (7) that is inserted into a bore (12) in the piston body and is rigidly connected axially to the crown portion (3) at one end and rigidly axially connected to said portion of the piston body at its other end.

3. A piston as claimed in claim 2 further characterized in that said connection between the anchoring member (7) and said portion of the piston body is a screw threaded connection (9) with pre-loaded threads.

4. A piston as claimed in claim 3 further characterized in that said anchoring means is a headed bolt (23) that is rigidly connected axially to one of said crown or body portions by being screw threaded therein and by abutment of the head (22) with said one portion to lock the engaging threads; (Figs. 5, 6).

5. A piston as claimed in claim 4 further characterized in that the bolt (23) is screw threaded in the other of said crown or body portions and the threads locked.

6. A piston as claimed in claim 5 further characterized in that said thread of the bolt is locked to the thread of said other portion by a lock nut, set screw or grub screw (24, 25 or 19).

7. A piston as claimed in claims 4 to 6 further characterized in that the head (22) of the bolt (23) engages a recess (21) in the crown portion (3) and abuts the bottom of the recess (21).

8. A piston as claimed in claim 3 further characterized in that the anchoring means is a stud (7) that is rigidly connected axially to one of said crown or body portions by being screw threaded in a blind hole (13) therein and by abutment of the leading end of the stud with the end of said hole; (Figs. 1—4).

9. A piston as claimed in claim 8 further characterized in that the stud (7) is screw threaded in the other of said crown or body portions and the threads locked.

10. A piston as claimed in claim 9 further characterized in that said thread of the stud (7) is locked to the thread of said other portion by a lock nut, set screw of grub screw (16, 20 or 19).

11. A piston as claimed in claims 8 to 10 further characterized in that the stud (7) is screw threaded in a blind hole (13) in the underside of the crown portion (3).

12. A piston as claimed in claims 3 to 11 further characterized in that each of said screw threaded connections between the anchoring member (7) and the crown or body portion is formed using a threaded anchoring member that forms the cooperating thread in said crown or body portion during insertion therein; (Figs. 1—6).

13. A piston as claimed in claim 3 further characterized in that said screw threaded connection is produced between cooperating pre-formed threads that are locked by a difference in pitch between the two threads.

14. A piston as claimed in claim 2 further characterized in that the anchoring member (26) is rigidly connected axially at one end to said body portion by a nut (28) that is threaded over said one end of the anchoring member so as to abut the bottom of a recess (27) in said body portion, and that, is loaded against said bottom by a member (29) threaded in said recess (27) so as to abut said one end of the anchoring member; (Figs. 7, 8).

15. A piston as claimed in claim 8 further characterized in that the anchoring member (26) is rigidly connected axially at one end to said body portion by a frusto-conical shaped nut (32) that is threaded on said one end of the anchoring member and is received in a correspondingly frusto-conical shaped recess (31) in said body portion, (Fig. 9).

16. A piston as claimed in claim 2 further characterized in that the anchoring member (26) is rigidly connected axially at one end to said body portion by a member (35, 42) that is threaded in a recess (36) in said body portion and clamps a portion (33, 41) at said one end of the anchoring member against the bottom of said recess; (Figs. 10, 11).

17. A piston as claimed in claim 16 further characterized in that said portion at said one end of the anchoring member (26) is a flared portion (33); (Fig. 10).

18. A piston as claimed in claim 16 further characterized in that said portion at said one end of the anchoring member (26) is an olive (41); (Fig. 11).

19. A piston as claimed in claim 2 further characterized in that the anchoring member (26) is rigidly connected axially at one end to said body portion by a threaded member (77) that is in threaded engagement with a portion of the anchoring member (26) and abuts said body portion to urge a shoulder (74) on the anchoring member against an abutment (75) on said body portion; (Figs. 21, 22).

20. A piston as claimed in claim 19 further characterized in that the threaded member (77) is a nut threaded on a reduced diameter end portion (73) of the anchoring member (26), said shoulder (74) being formed by the change in diameter of the anchoring member; (Fig. 21).

21. A piston as claimed in claim 20 further characterized in that the anchoring member (26) is tubular throughout the larger diameter portion (72) on its length.

22. A piston as claimed in claim 19 further characterized in that the threaded member is a bolt (78) that is threaded into the end of the anchoring member (26), said shoulder (74) being the free end of said anchoring member (26); (Fig. 22).

23. A piston as claimed in claims 19 to 22 further characterized in that the anchoring member (26) is received in a bore (76) in the body portion having an internal shoulder (75) to form said abutment.

24. A piston as claimed in claim 2 further characterized in that the anchoring member (26) is rigidly connected to said body portion (1) by an abutment (43) and spring means (44) that acts on said anchoring member (26) so as to pre-load the abutment (43) into engagement with the body portion (1); (Figs. 12—17).

25. A piston as claimed in claim 24 further characterized in that the spring means (44) is supported on the piston body (1) so as to act axially on the free end of the anchoring member (26) and urge the abutment (43) upwards into engagement with a lower surface of the piston body (1).

26. A piston as claimed in claim 2 further characterized in that the anchoring member (26) is rigidly connected to said body portion (1) by spring means (63) that acts between the piston body (1) and the anchoring member (26) so as to urge the free end of the anchoring member (26) downwards into engagement with a thrust member (64) connected to the lower end of the piston body (1); (Figs. 18, 19).

27. A piston as claimed in claim 2 further characterized in that the anchoring member (26) is rigidly connected to the body portion (1) by a planar resilient member (68) and an abutment member (69) that are arranged in a crossover relationship and both at one end engage the anchoring member (26) and at their other end an adjustable clamp member (70) so that movement of the clamp member (70) towards the abutment member (69) causes the resilient member (69) to urge the anchoring member (26) in one direction against the action of the abutment member (69); (Fig. 20).

28. A piston as claimed in claim 1 further characterized in that said anchoring means comprises at least one strut member (79) that extends from the crown portion (3) into a bore (82) in the piston body (1) so as to absorb compressive forces therebetween and thereby relieve compressive loading of the adjacent faces of the piston body (1) and crown portion (3), and at least one tie member (80) that is connected between the piston body (1) and crown portion (3) to restrain separation and that is pre-loaded in tension; (Figs. 23—26).

29. A piston as claimed in claim 28 further characterized in that the pre-load in the tie member (80) is produced by a resilient strut (79).

30. A piston as claimed in claim 29 further characterized in that the strut (79) comprises an axially compressible tubular element.

31. A piston as claimed in claim 30 further characterized in that the strut (79) is received in a bore (82) in the piston body (1) with the tie member (80) so as to surround the tie member (80), the lower end of the strut (79) abutting an internal shoulder (87) in the bore (82); (Fig. 23).

32. A piston as claimed in claim 29 or 30 further characterized in that the strut member (79) is received in a blind bore (82) in the piston body (1); (Figs. 24, 25).

33. A piston as claimed in any one of the preceding claims further characterized in that the anchoring means (80) extends through the piston body (1) and has a threaded end portion on which a nut (83) is engaged to hold the crown portion (3) and piston body (1) together.

34. A piston as claimed in claim 29 further characterized in that the pre-load in the tie member (80) is produced by separate resilient means (99); (Fig. 26).

35. A piston as claimed in claim 34 further characterized in that said resilient means (99) is carried on the tie member (80).

36. A piston as claimed in claim 35 further characterized in that the tie member (80) extends through the piston body (1) and has a threaded end portion on which a nut (98) is engaged to hold the crown portion (3) and piston body (1) together, the resilient means (99) being located between the nut (98) and an adjacent face of the piston body (1).

37. A piston as claimed in any one of the preceding claims further characterized in that the crown portion (3) comprises an annular member formed with a combustion chamber lip at its inner periphery.

38. A piston as claimed in any one of claims 14 to 36 further characterized in that the anchoring member (26) is formed with an end portion that is received in a recess in the crown portion and is welded or brazed in place.

39. An internal combuation engine having a piston as claimed in any one of the preceding claims.

## Revendications

1. Piston pour moteur à combustion interne comprenant un corps de piston et une portion de couronne reliés par des moyens d'ancrage comportant un ou plusieurs éléments allongés qui s'étendent de la portion de couronne dans le corps du piston de manière à transmettre les charges de traction et de compression de la couronne à une portion du corps de piston dans une zone espacée axialement de la portion de couronne à une température qui, aux températures maximales de fonctionnement, est assez basse pour empêcher le jeu des moyens d'ancrage, ledit piston étant charactérisé en ce que des surfaces coopérantes desdits moyens d'ancrage (7, 9, 16) et du corps de piston (1) sont préchargées en contact mutuel au moyen d'une énergie de contrainte appliquée mécaniquement, conservée dans les moyens d'ancrage et dans le corps de piston (1) et qui agit pour empêcher la séparation desdites surfaces coopérantes sous l'action desdites charges de traction et de compression sans dépendre de quelconques forces de réaction entre les faces adjacentes de la portion de couronne et du corps de piston.

2. Piston suivant la revendication 1, caractérisé en outre en ce que les moyens d'ancrage comportent au moins un élément (7) qui est enfoncé dans un alésage (12) du corps de piston et est relié axialement de façon rigide à la portion de couronne (3) par l'une de ses extrémités, et est relié axialement de façon rigide à la portion précitée du corps de piston par son autre extrémité.

3. Piston suivant la revendication 2, caractérisé en outre en ce que la liaison entre l'élément d'ancrage (7) et la portion précitée du corps de piston est une liaison par vissage (9) dont les filets sont préchargés.

4. Piston suivant la revendication 3, caractérisé en outre en ce que les moyens d'ancrage précités sont constitués par un boulon fileté (23) qui est relié rigidement axialement à l'une des portions précitées de couronne ou de corps de piston par vissage dans ladite portion et par venue en butée de la tête (22) avec ladite portion pour bloquer les filets en engagement (Figures 5, 6).

5. Piston suivant la revendication 4, caractérisé en outre en ce que le boulon (23) est vissé dans l'autre des portions précitées de couronne et de corps de piston et en ce que les filets sont bloqués.

6. Piston suivant la revendication 5, caractérisé en outre en ce que les filets du boulon sont bloqués sur les filets de l'autre portion par un contre-écrou, une vis d'arrêt ou une vis sans tête (24, 25 ou 19).

7. Piston suivant l'une des revendications 4 à 6, caractérisé en outre en ce que la tête (22) du boulon (23) s'engage dans un logement (21) de la portion de couronne (3) et bute contre le fond du logement (21).

8. Piston suivant la revendication, 2 caractérisé en outre en ce que les moyens d'ancrage sont constitués par un goujon (7) qui est relié rigidement axialement à l'une des portions précitées de couronne ou de corps de piston par vissage dans un trou borgne (13) ménagé à l'intérieur et par venue en butée de l'extrémité avant du goujon contre le fonds dudit trou borne (figures 1 à 4).

9. Piston suivant la revendication 8, caractérisé en outre en ce que le goujon (7) est vissé dans l'autre portion de couronne ou de corps de piston et les filets bloqués.

10. Piston suivant la revendication 9, caractérisé en outre en ce que le filet du goujon (17) est bloqué sur le filet de l'autre portion précitée par un contre-écrou, une vis d'arrêt ou une vis dans tête (16, 20 ou 19).

11. Piston suivant l'une des revendications 9 à 10, caractérisé en outre en ce que le goujon (7) est vissé dans un trou borgne (13) ménagé dans le dessous de la portion de couronne (3).

12. Piston suivant l'une des revendications 3 à 11, caractérisé en outre en ce que chacune des liaisons par vissage entre l'élément d'ancrage (7) et la portion de couronne ou de corps de piston est obtenue au moyen d'un élément d-ancrage fileté qui taraude le filet correspondant dans la portion précitée de couronne ou de corps de piston lors de son introduction dans ladite portion (figures 1 à 6).

13. Piston suivant la revendication 3, caractérisé en outre en ce que la liaison par vissage est obtenue entre des filets de vis préformés coopérants qui sont bloquées par une différence de pas entre les deux filets.

14. Piston suivant la revendication 2, caractérisé en outre en ce que l'élément d'ancrage (26) est relié rigidement axialement par l'une de ses extrémités à la portion précitée de corps de piston par un écrou (28) qui est vissé sur ladite extrémité de l'élément d'ancrage de manière à buter sur le fond d'un logement (27) ménagé dans ladite portion de corps de piston, et qui est chargé contre ledit fond par un organe (29) vissé dans ledit logement (27) de façon à buter contre ladite extrémité de l'élément d'ancrage; (figures 7, 8).

15. Piston suivant la revendication 8, caractérisé en outre en ce que l'élément d'ancrage est relié rigidement et axialement par l'une des ses extrémités à la portion prévitée de corps de piston par un écrou de forme tronconique (32) qui est vissé sur ladite extrémité de l'élément d'ancrage et est reçu dans un longement tronconique complémentaire (31) ménagé dans ladite portion de corps de piston; (figure 9).

16. Piston suivant la revendication 2, caractérisé en outre en ce que l'élément d'ancrage (26) est relié rigidement et axialement par l'une de ses extrémités à la portion précitée de corps de piston par un organe (35, 42) qui est vissé dans un logement (36) ménagé dans ladite portion de corps de piston et serre une portion (33, 41) de l'extrémité de l'élément d'ancrage contre le fond dudit logement; (figures 10, 11).

17. Piston suivant la revendication 16, caractérisé en outre en ce que la portion précitée de l'extrémité de l'élément d'ancrage (26) est une portion évasée (33); (figure 10).

18. Piston suivant la revendication 16, caractérisé en outre en ce que la portion précitée de l'extrémité de l'élément d'ancrage (26) est une olive (41); (figure 11).

19. Piston suivant la revendication 2, caractérisé en outre en ce que l'élément d'ancrage (26) est relié rigidement et axialement par l'une de ses extrémités à l'une des extrémités de la portion précitée de corps de piston par un élément fileté (77) qui est en engagement par vissage avec une portion de l'élément d'ancrage (26) et bute contre ladite portion du corps de piston pour presser un épaulement (74) de l'élément d'ancrage contre un épaulement (75) de la portion du corps de piston; (figures 21, 22).

20. Piston suivant la revendication 19, caractérisé en outre en ce que l'élément fileté (77) est un écrou vissé sur une portion d'extrémité de diamètre réduit (73) de l'élément d'ancrage, l'épaulement précité (74) étant formé par le changement de diamètre de l'élément d'ancrage; (figure 21).

21. Piston suivant la revendication 20, caractérisé en outre en ce que l'élément d'ancrage (26) est tubulaire sur toute la longueur de la portion de plus grand diamètre (72).

22. Piston suivant la revendication 19, caractérisé en outre en ce que l'élément fileté est un boulon (78) qui est vissé dans l'extrémité de l'élément d'ancrage (26), l'épaulement précité (74) étant constitué par l'extrémité libre dudit élément d'ancrage (26); (figure 22).

23. Piston suivant l'une des revendications 19 à 22, caractérisé en outre en ce que l'élément d'ancrage (26) est reçu dans un alésage (76) de la portion de corps de piston présentant un épaulement intérieur (75) pour former la butée précitée.

24. Piston suivant la revendication 2, caractérisé en outre en ce que l'élément d'ancrage (26) est relié rigidement à la portion précitée de corps de piston (1) par une butée (43) et des organes élastiques (44) qui agissent sur ledit élément d'ancrage (26) de manière à précharger la butée (43) en engagement avec la portion de corps de piston (1); (figures 12 à 17).

25. Piston suivant la revendication 24, caractérisé en outre en ce que les organes élastiques (44) sont supportés sur le corps de piston (1) de manière à agir axialement sur l'extrémité libre de l'élément d'ancrage (26), et à presser la butée (43) vers le haut, en engagement avec une surface inférieure du corps de piston (1).

26. Piston suivant la revendication 2, caractérisé en outre en ce que l'élément d'ancrage (26) est relié rigidement à la portion précitée de corps de piston (1) par des organes élastique (63) qui agissent entre le corps de piston (1) et l'élément d'ancrage (26) de manière à pousser l'extrémité de l'élément d'ancrage (26) vers le bas en engagement avec un organe de poussée (64) relié à l'extrémité inférieure du corps de piston (1); (Figures 18, 19).

27. Piston suivant la revendication 2, caractérisé en outre en ce que l'élément d'ancrage (26) est relié rigidement à la portion de corps de piston (1) par un élément élastique plat (68) et par un élément de butée (69) qui sont disposés de façon croisée et viennent l'un et l'autre en engagement par l'une de leurs extrémités avec l'élément d'ancrage (26) et par leur autre extrémité avec un élément de serrage réglable (70) de façon que le déplacement de l'élément de serrage (70) vers l'élément de butée (69) améne l'élément élastique (68) à presser l'élément d'ancrage (26) dans une direction à l'encontre de l'action de l'élément de butée (69); (figure 20).

28. Piston suivant la revendication 1, caractérisé en outre en ce que les moyens d'ancrage comprennent au moins une tige (79) qui s'étend de la portion de couronne (3) dans un alésage (82) du corps de piston (1) de manière à absorber les forces de compression s'exerçant entre eux et alléger ainsi les charges de compression des faces adjacents du corps de piston (1) et de la portion de couronne (3), et au moins un tirant (80) qui est fixé entre le corps de piston (1) et la portion de couronne (3) pour empêcher toute séparation et qui est préchargé en tension; (figures 23 à 26).

29. Piston suivant la revendication 28, caractérisé en outre en ce que la pré-charge du dirant (80) est produite par une tige élastique (79).

30. Piston suivant la revendication 29, caractérisé en outre en ce que la tige (79) comprend un élément tubulaire axialement compressible.

31. Piston suivant la revendication 30, caractérisé en outre en ce que la tige (79) est reçue dans un alésage (82) du corps de piston (1) avec le tirant (80) de manière à entourer le tirant (80), l'extrémité inférieure de la tige (79) venant buter contre un épaulement intérieur (87) de l'alésage (82); (figure 23).

32. Piston suivant la revendication 29 ou la revendication 30, caractérisé en outre en ce que la tige (79) est reçue dans une alésage borgne (82) du corps de piston (1); (figures 24, 25).

33. Piston suivant l'une quelconque des revendications 1 à 32, caractérisé en outre en ce que les moyens d'ancrage (80) s'étendent dans le corps de piston (1) et comportent une portion d'extrémité filetée sur laquelle un écrou (83) s'engage pour maintenir la portion de couronne (3) et le corps de piston (1) assemblés.

34. Piston suivant la revendication 29, caractérisé en outre en ce que la pré-charge du tirant (80) est produite par des organes élastique séparés (99); (figure 26).

35. Piston suivant la revendication 34, caractérisé en ce que les organes élastiques (99) précités sont montés sur le tirant (80).

36. Piston suivant la revendication 35, caractérisé en outre en ce que le tirante (80) s'étend dans le corps de piston (1) et présente une portion d'extrémité filetée sur laquelle un écrous (98) s'engage pour maintenir la portion de couronne (3) et le corps de piston (1) assemblés, l'organe élastique (99) étant disposé entre l'écrou (98) et une face adjacente du corps de piston (1).

37. Piston suivant l'une quelconque des revendications 1 à 36, caractérisé en outre en ce que la portion de couronne (3) comprend un élément annulaire présentant sur sa périphérie intérieure une lèvre de chambre de combustion.

38. Piston suivant l'une quelconque des revendications 14 à 36, caractérisé en outre en ce que l'élément d'ancrage (26) présente une portion d'extrémité qui est reçue dans un logement de la portion de couronne et est soudée ou brasée sur place.

39. Moteur à combustion interne, caractérisé en ce qu'il comporte un piston suivant l'une quelconque des revendications 1 à 38.

**Patentansprüche**

1. Koben für eine Brennkraftmaschine mit einem Kolbenschaft und einem Kolbenboden, die durch Verankerungen miteinander verbunden sind, welche ein oder mehrere langgestreckte Teile aufweisen, die von Kolbenboden bis in den Kolbenschaft reichen, um Zug- und Druckkräfte vom Boden zu einem Teil des Kobenschaftes zu übertragen, der axial vom Boden entfernt liegt und eine Temperatur aufweist, die bei maximaler Betriebstemperatur gering genug ist, um das Lösen der Verankerungen zu vermeiden, dadurch gekennzeichnet, daß die zusammenargeitenden Flächen der Verankerungen (7, 9, 16) und des Kolbenschaftes (1) vorgespannt miteinander mittels mechanisch angewandter in den Verankerungen und im Kolbenschaft (1) gespeicherter Formänderungsarbeit in Kontakt gebracht sind, die das Trennen der zusammenarbeitenden Flächen durch die Zug- und Druckkräfte verhindert, ohne von Reaktionskräften zwischen den benachbarten Flächen des Kolbenboden und des Kolbenschaftes abhängig zu sein.

2. Kolben nach Anspruch 1, dadurch gekennzeichnet, daß die Verankerungen mindestens ein Teil (7) aufweisen, welches in eine Bohrung (12) im Kolbenschaft eingesetzt ist und mit einem Ende axial fest mit dem Kolbenboden (3) verbunden und mit dem anderen Ende axial fest mit dem Teil des Kolbenschaftes verbunden ist.

3. Kolben gemäß Anspruch 2, dadurch gekennzeichnet, daß die Verbindung zwischen der Verankerung (7) und dem Teil des Kolbenschaftes eine Schraubverbindung (9) mit vorgespanntem Gewinde ist.

4. Kolben gemäß Anspruch 3, dadurch gekennzeichnet, daß die Verankerung ein Kopfbolzen (23) ist, der axial fest mit dem Boden oder Schaftteil verbunden ist, in dem er dort hineingeschraubt ist und der Kopf (22) auf dem jeweiligen Teil aufliegt, um die Gewinde zu sichern; (Fig. 5, 6).

5. Kolben gemäß Anspruch 4, dadurch gekennzeichnet, daß der Bolzen (23) in das Boden- oder Schaftteil eingeschraubt ist und die Gewinde gesichert sind.

6. Kolben gemäß Anspruch 5, dadurch gekennzeichnet, daß das Gewinde des Bolzens gegenüber dem Gewinde des jeweiligen Teiles durch eine Kontermutter, einen Gewindestift oder eine Madenschraube (24, 25 oder 19) gesichert ist.

7. Kolben gemäß den Ansprüchen 4 bis 6, dadurch gekennzeichnet, daß der Kopf (22) des Bolzens (23) in einer Ausnehmung (21) des Kolbenbodens (3) angeordnet ist und auf dem Boden der Ausnehmung (21) aufliegt.

8. Kolben gemäß Anspruch 3, dadurch gekennzeichnet, daß die Verankerung ein Bolzen (7) ist, der axial fest mit den Boden- oder Schaftteilen verbunden ist, indem er in ein Blindloch (13) geschraubt its und das vordere Ende des Bolzens auf dem Boden der Bohrung aufliegt; (Fig. 1 bis 4).

9. Kolben gemäß Anspruch 8, dadurch gekennzeichnet, daß der Bolzen (7) in die Boden- oder Schaftteile eingeschraubt ist un die Gewinde gesichert sind.

10. Kolben nach Anspruch 9, dadurch gekennzeichnet, daß das Gewinde des Bolzens (7) gegenüber dem der anderen Teile durch eine Kontermutter, einen Gewindestift oder eine Madenschraube (16, 20 oder 19) gesichert ist.

11. Kolben gemäß Anspruch 8 bis 10, dadurch gekennzeichnet, daß der Bolzen (7) in eine Blindbohrung (13) auf der Unterseite des Bodenteils (3) eingeschraubt ist.

12. Kolben gemäß Ansprüchen 3 bis 11, dadurch gekennzeichnet, daß jede Schraubverbindung zwischen der Verankerung (7) und dem Boden- bzw. Schaftteil durch ein Verankerungsteil mit Gewinde gebildet ist, welches das entsprechende Gewinde im Boden oder Schaftteil beim Einschrauben erzeugt; (Fig. 1 bis 6).

13. Kolben gemäß Anspruch 3, dadurch gekennzeichnet, daß die Schraubverbindungen durch zusammenarbeitende vorgeformte Gewinde gebildet sind und durch einen Unterschied der Steigung zwischen dem beiden jeweiligen Gewinden gesichert sind.

14. Kolben gemäß Anspruch 2, dadurch gekennzeichnet, daß die Verankerung (26) mit einem Ende axial fest mittels einer Mutter (28) mit dem Schaftteil verbunden ist, die auf das eine Ende der Verankerung geschraubt ist und auf dem Boden einer Ausnehmung (27) im Schaftteil aufliegt und gegenüber dem Boden durch ein Teil (29) vorgespannt ist, welches so in die Ausnehmung (27) eingeschraubt ist, daß es auf dem einen Ende der Verankerung aufliegt; (Fig. 7, 8).

15. Kolben gemäß Anspruch 8, dadurch gekennzeichnet, daß die Verankerung (26) axial fest mit einem Ende mit dem Schaftteil mittels einer kegelstumpfförmigen Mutter (32) verbunden ist, die auf das eine Ende der Verankerung aufgeschraubt ist und innerhalb einer entsprechenden kegelstumpfförmigen Ausnehmung (31) im Schaftteil liegt; (Fig. 9).

16. Kolben nach Anspruch 2, dadurch gekennzeichnet daß die Verankerung (26) mit einem Ende axial fest mit dem Schaftteil durch ein Teil (35, 42) verbunden ist, welches in eine Ausnahmung (36) im Schaftteil eingeschraubt ist und ein Teil (33, 41) des Endes der Verankering gegen den Boden der Ausnehmung spannt; (Fig. 10, 11).

17. Kolben gemäß Anspruch 16, dadurch gekennzeichnet, daß der Teil des Endes der Verankerung (26) ein aufgeweiteter Abschnitt (33) ist, (Fig. 10).

18. Kolben gemäß Anspruch 16, dadurch gekennzeichnet, daß der Teil des Endes der Verankerung (26) ein Doppelkegelring (41) ist; (Fig. 11).

19. Kolben gemäß Anspruch 2, dadurch gekennzeichnet, daß die Verankerung (26) mit einem Ende axial fest mit dem Schaftteil durch ein Gewindeteil (77) verbunden ist, welches auf die Verankerung (26) aufgeschraubt ist und auf dem Schaftteil aufliegt und eine Schulter (74) an der Verankerung gegen eine Auflage (75) am Schaftteil drückt; (Fig. 21, 22).

20. Kolben gemäß Anspruch 19, dadurch gekennzeichnet, daß das Gewindeteil (77) eine Mutter ist, die auf den Endabschnitt (73) mit verringertem Durchmesser der Verankerung (26) geschraubt ist und die Schulter (74) durch eine Durchmesseränderung der Verankerung gebildet ist; (Fig. 21).

21. Kolben gemäß Anspruch 20, dadurch gekennzeichnet, daß die Verankerung (26) über die Länge des Abschnittes (72) mit dem größeren Durchmesser rohrförmig ausgebildet ist.

22. Kolben gemäß Anspruch 19, dadurch gekennzeichnet, daß das Gewindeteil ein Bolzen (78) ist, der in das Ende der Verankerung (26) geschraubt ist und die Schulter (74) das freie Ende der Verankerung (26) ist; (Fig. 22).

23. Kolben gemäß den Ansprüchen 19 bis 22, dadurch gekennzeichnet, daß die Verankerung (26) in einer Bohrung (76) des Schaftteils liegt, die eine innere Schulter (75) zur Bildung eines Anschlages aufweist.

24. Kolben gemäß Anspruch 2, dadurch gekennzeichnet, daß die Verankerung (26) fest mit dem Schaftteil (1) verbunden ist, die durch einen Anschlag (43) und eine Feder (44) gebildet ist, die auf die Verankerung (26) so einwirken, daß der Anschlag (43) mit dem Schaftteil (1) in Eingriff gebracht ist; (Fig. 12 bis 17).

25. Kolben gemäß Anspruch 24, dadurch gekennzeichnet, daß die Feder (44) vom Kolbenschaft (1) getragen ist und auf das freie ende der Verankerung (26) einwirkt und den Anschlag (43) aufwärts in Eingriff mit der Unterseite des Kolbenschaftes (1) bringt.

26. Kolben gemäß Anspruch 2, dadurch gekennzeichnet, daß die Verankerung (26) durch Federn (63) fest mit dem Schaftteil (1) verbunden ist, die zwischen dem Schaftteil (1) und der Verankerung so angeordnet sind, daß sie das freie Ende der Verankerung (26) abwärts in Eingriff mit einem Schubglied (64) bringen, welches mit dem unteren Ende des Kolbenschaftes (1) verbunden ist; (Fig. 18, 19).

27. Kolben gemäß Anspruch 2, dadurch gekennzeichnet, daß die Verankerung (26) fest mit dem Schaftteil (1) durch ein planes federndes Teil (68) und einen Anschlag (69) verbunden ist, die gekreuzt zueinander angeordnet sind und beide an einem Ende die Verankerung (26) und mit ihrem anderen Ende eine einstellbare Klemmeinrichtung (70) erfassen, so daß eine Bewegung der Klemmeinrichtung (70) auf den Anschlag (69) hin die Verankerung (26) über das federnde Teil (68) in eine Richtung entgegengesetzt zur Wirkung des Anschlages (69) drückt; (Fig. 20).

28. Kolben gemäß Anspruch 1, dadurch gekennzeichnet, daß die Verankerungen mindestens ein Strebteil (79) enthalten, welches vom Bodenteil (3) in eine Bohrung (82) im Kolbenschaft (1) reicht, um die dazwischenliegenden Druckkräfte aufzufangen, um dadurch die Druckbelastung der benachbarten Flächen von Kolbenschaft (1) und Bodenteil (3) abzuleiten und durch mindestens eine Halterungseinrichtung (80) zwischen dem Kolbenschaft (1) und dem Bodenteil (3), die vorgespannt ist und das Trennen der Teile verhindert; (Fig. 23 bis 26).

29. Kolben gemäß Anspruch 28, dadurch gekennzeichnet, daß die vorgespannte Halterungseinrichtung (80) durch eine federnde Strebe (79) gebildet ist.

30. Kolben gemäß Anspruch 29, dadurch gekennzeichnet, daß die Strebe (79) ein axial zusammendrückbares rohrförmiges Element aufweist.

31. Kolben gemäß Anspruch 30, dadurch gekennzeichnet, daß die Strebe (79) in einer Bohrung (82) im Kolbenschaft (1) zusammen mit der Halterungseinrichtung (80) liegt und dabei die Halterungseinrichtung (80) umgibt, wobei das untere Ende der Strebe (79) auf einer inneren Schulter (87) im Inneren der Bohrung (82) liegt; (Fig. 23).

32. Kolben nach Anspruch 29 oder 30, dadurch gekennzeichnet, daß die Strebe (79) in einer Blindbohrung (82) im Kolbenschaft (1) liegt; (Fig. 24, 25).

33. Kolben nach einem der vorangehenden Ansprüche, dadurch gekennzeichnet, daß die Verankerungen (80) durch den Kolbenschaft (1) führen und am Ende einen Gewindeabschnitt tragen, auf welchem eine Mutter (83) aufgesetzt ist, um das Bodenteil (3) und den Kolbenschaft (1) zusammenzuhalten.

34. Kolben nach Anspruch 29, dadurch gekennzeichnet, daß die vorgespannte Halterungseinrichtung (80) durch separate federnde Einrichtungen (99) gebildet ist; (Fig. 26).

35. Kolben gemäß Anspruch 34, dadurch gekennzeichnet, daß die federnde Einrichtung (99) von der Halterungseinrichtung (80) getragen ist.

36. Kolben nach Anspruch 35, dadurch gekennzeichnet, daß die Halterungseinrichtung (80) durch den Kolbenschaft (1) geführt ist und am Ende einen Gewindeabschnitt aufweist, auf welchem eine Mutter (98) sitzt, die das Bodenteil (3) und den Kolbenschaft (1) zusammenhält, wobei zwischen der Mutter (98) und der gegenüberliegenden Fläche des Kolbenschaftes (1) die federnde Einrichtung (99) angeordnet ist.

37. Kolben gemäß einem der vorangehenden Ansprüche, dadurch gekennzeichnet, daß das Bodenteil (3) ein ringförmiges Teil aufweist, welches mit seinem Innenrand eine Brennkammerlippe bildet.

38. Kolben gemäß einem der Ansprüche 14 bis 36, dadurch gekennzeichnet, daß die Verankerung (26) einen Endabschnitt aufweist, der in seiner Ausnehmung im Bodenteil sitzt und dort festgeschweißt oder -gelötet ist.

39. Brennkraftmaschine mit einem Kolben wie er in einem der vorangehenden Ansprüche beansprucht ist.

FIG.1.

FIG.3.

FIG.2.

FIG.4.

FIG. 5.

FIG. 6.

FIG. 7.

FIG. 8.

FIG. 9.

**FIG . 10.**

**FIG .11.**

FIG.12

FIG.13

FIG.14

FIG 15

FIG.16

FIG.17

FIG.18

FIG.19

FIG. 20

FIG. 21

FIG. 22

FIG. 23

FIG. 24

FIG. 25.

FIG.26.